# EUROPEAN PATENT SPECIFICATION

(11) **EP 1 346 449 B1**
(45) Date of publication and mention of the grant of the patent: **12.05.2010**
(21) Application number: 01985339.9
(22) Date of filing: 21.11.2001
(51) Int. Cl.: H02G 1/08, H02G 1/06, G02B 6/50

(54) **METHOD FOR INSTALLING A DUCT; DEVICE FOR CARRYING OUT SAID METHOD, AND A TAPE-SHAPE ELEMENT FOR USE WITH SAID METHOD**
VERFAHREN ZUM INSTALLIEREN EINES ROHRS; VORRICHTUNG ZUR DURCHFÜHRUNG DES GENANNTEN VERFAHRENS SOWIE BANDFÖRMIGES ELEMENT ZUR VERWENDUNG IN DEM GENANNTEN VERFAHREN
PROCEDE D'INSTALLATION D'UNE BUSE ; DISPOSITIF DE MISE EN OEUVRE DUDIT PROCEDE ; ET ELEMENT EN FORME DE BANDE UTILISE DANS LEDIT PROCEDE

(30) Priority: 18.12.2000 NL 1016894
(43) Date of publication of application: 24.09.2003
(73) Proprietor: Koninklijke KPN N.V., 9726 AE Groningen (NL)
(72) Inventor: VAN BIJSTERVELD, Cornelis, Gasparus, NL-2251 RC Voorschoten (NL); KERLING, Frank, Martin, 2266 AJ Leidschendam (NL)
(74) Representative: Wuyts, Koenraad Maria
(86) International application number: PCT/EP2001/013728
(87) International publication number: WO 2002/050969

(56) References cited:
- EP-A- 0 292 037
- WO-A-92/10869
- GB-A- 2 085 670
- US-A- 5 639 183

## Description

The invention relates to a method for installing a duct, a longitudinal member being present along the section over which the duct is to be installed, the present longitudinal element being made use of as a conductor for the duct to be installed, and the duct being propelled.

Such method is known from US-A-5,639,183. The known method is intended for installing - instead of an existing telecommunication cable lying in the ground, particularly a copper cable - a duct through which an optical cable may be conducted. In the event of said method, the existing cable is excavated at a suitable point, and cut through. The duct is slid over an end released in this manner. To install the duct in the soil surrounding the existing cable over a greater length, a liquid - e.g., water - is conducted through the duct under pressure; it washes away the ground around the existing cable, while at the same time the duct is pushed forward. In this manner, a duct, or a duct consisting of several coupled segments, may be installed underground over a great distance along an existing cable, without much excavation work being required for said purpose. After having been installed, the cable, if so desired, may be pulled out of the duct. One of the advantages of the known method is that curvy sections are easy to follow, without expensive positioning equipment.

It should be noted that, in the present application, the word "duct" signifies any tubular member, without restriction as to its application, although in the application, more specifically, applying the inclusion of telecommunication cables is dealt with. In this connection, it is not impossible that the duct has already been provided, in advance, with one or more cables.

The known method is particularly suitable for replacing the existing copper telecommunication cable with a cable duct in which an optical fibre cable may be installed for installing, e.g., fibre up to the user, i.e. up to the home or company. The optical fibre may be installed in the duct, e.g., by way of blowing or pulling, installing by way of blowing being preferred, since in this case the forces exercised are spread out over the entire length and damages as a result of excess tensile forces are prevented. Such a method for blowing in a cable is described in EP-A-0,292,037. A combination of blowing in and pulling is also possible by attaching, at the end of the optical fibre cable, a so-called shuttle.

Under certain circumstances, it is undesirable to cut through the existing cable in order to thus be capable of sliding the duct over it. Such is the case, e.g., if the cable must remain available for other purposes.

An object of the invention is to offer a solution for said problem.

According to a first aspect the invention therefore provides for a method of the aforementioned type, a tape-shaped element around the existing longitudinal element during propulsion being formed into a duct closed all around, by coupling to one another coupling means present at the longitudinal edges of the tape-shaped element.

According to a further object the invention provides for a tape-shaped element provided, along the longitudinal edges, with coupling means carried out, according to a preferred embodiment, as complementary closing members. Said closing members are, e.g., of the "Zip-lock" type, comprising a closing member having an upright, barbed longitudinal edge, and a closing member having a longitudinal slot in the walls for which openings have been mounted for encasing the barbs. Other coupling or closing systems, however, may also be applied, and are well-known to those skilled in the art.

It should be noted that a tubular member having a closing member of the type which is also applicable in the event of the tape-shaped element according to the invention, is known per se as an insulation for heating tubes. In this connection, the tube may be opened along a longitudinal cut to such an extent that it may be placed over the heating tube, and subsequently may be closed by way of the closing members around the tube.

The invention is based, among other things, on the insight that interrupting an existing cable is not required, when the duct to be applied around it is not initially closed all around, but is gradually folded around the cable from a tape shape during installation and, in doing so, is closed to the then opposite longitudinal edges of the tape-shaped element.

The existing cable may continue to be permanently in the ground and, in this case, is enclosed by the duct, which may have the advantage that, e.g., a cable having a lead sheating continues to be insulated with respect to the surrounding ground. It goes without saying that the existing cable may also be removed from the duct at any desired moment.

The use of a tape-shaped element for forming a duct has the additional advantage that significantly less space is required for storage, that the transport is simpler, and that it does not have the tendency to continue to be curved, as a tube would, as a result of winding it around a reel.

A further advantage is that a small bending radius is possible, as a result of which installation in smaller spaces poses no problem.

According to a preferred embodiment, the tape-shaped element is provided, over its length, with one or, preferably, several microducts. This offers numerous advantages. To start with, no separate microducts need be applied afterwards in the installed duct. Secondly, the microducts give the tape-shaped element additional rigidity in the event of it being pushed down into the ground, and in the third place the microducts, when they are located on the outside of the duct, may be interrupted in a simple manner, and released from the duct circumference. From such a microduct released from the duct, the required welds for, e.g., connections to homes, may be made. It is also possible to provide both sides of the tape-shaped element with microducts or, if the microducts are located to one side only, to form the closing members in such a manner that the tape-shaped element may be optionally closed with the microducts on the inside or the outside circumference of the duct.

The tape-shaped element may be manufactured of synthetic substance, e.g., of HDPE - high-density polyethylene. The tape may consist of several layers, if so desired, it being possible, e.g., to include an aluminium layer as water-retaining element.

Within the framework of the invention, it is also possible to implement the tape-shaped elements in such a manner that these are capable of being coupled in the transverse direction as well, by way of the closing members, as a result of which ducts having variable diameters may be formed by manufacturing them from one or several tape-shaped elements coupled sideways.

A further variant of the invention is a tape-shaped element having microducts, there already having been integrated preferably optical fibres or cables into the microducts; particularly the socalled plastic-optical-fibre (= POF) cable is suitable for this purpose.

According to a still further aspect the invention provides for a system for carrying out the method according to the invention, comprising means for supplying a tape-shaped element which is provided with longitudinal edges thereof which are capable of being mutually coupled, means for folding around a longitudinal element of the tape-shaped element and coupling to one another longitudinal edges, means for transporting, with respect to the longitudinal element, a tape-shaped element formed into a duct, and means for feeding a fluid to the front end of the duct. If the tape-shaped element is provided with microducts, the latter may be used for giving off the fluid towards the front end of the duct in order to sufficiently loosen the ground around the existing longitudinal element and/or to wash it away in order to make room for the duct.

Below, the invention will be further clarified on the basis of exemplary embodiments with reference to the drawing. In it,
- FIG. 1 shows a schematic view of an arrangement which is suitable for implementing the method according to the invention;
- FIG. 2a and 2b show views in perspective of a tape-shaped element according to the invention;
- FIG. 2c shows variants of the closing members;
- FIG. 3 shows a view in transverse section of a tape-shaped element according to FIG. 2, formed into a duct according to the invention;
- FIG. 4 shows a schematic view of a possible device for forming a duct out of a tape-shaped element;
- FIG. 5 shows a schematic view of means for closing the tape-shaped element into a duct, and propelling the duct formed in this manner.

In the figures, similar components are indicated by the same reference numerals.

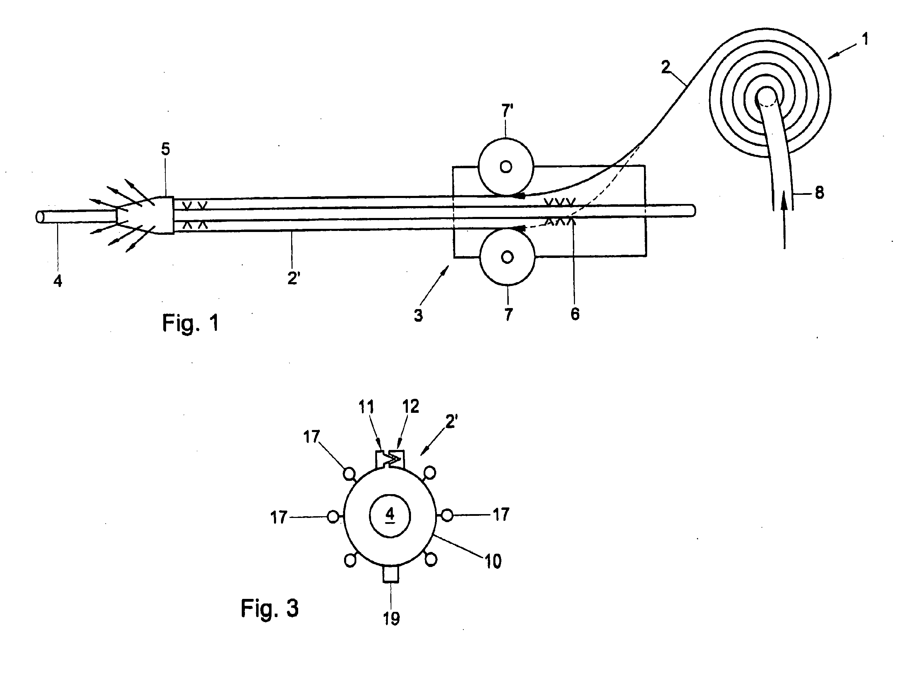

FIG. 1 shows a general schematic view of a device for carrying out the method according to the invention. In general, for further details relating to the present device, in so far as applicable, reference may be made to the aforementioned U.S. patent 5,639,183.

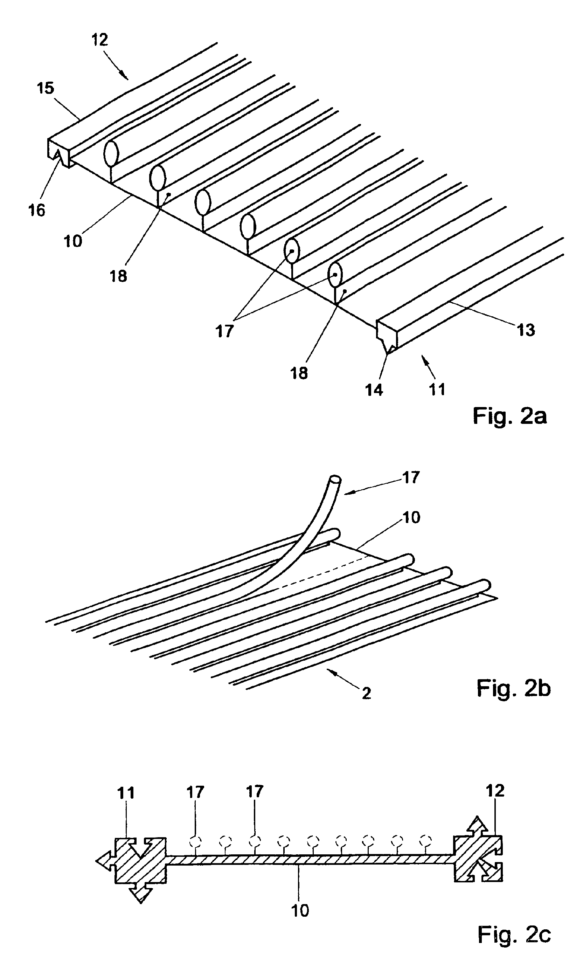

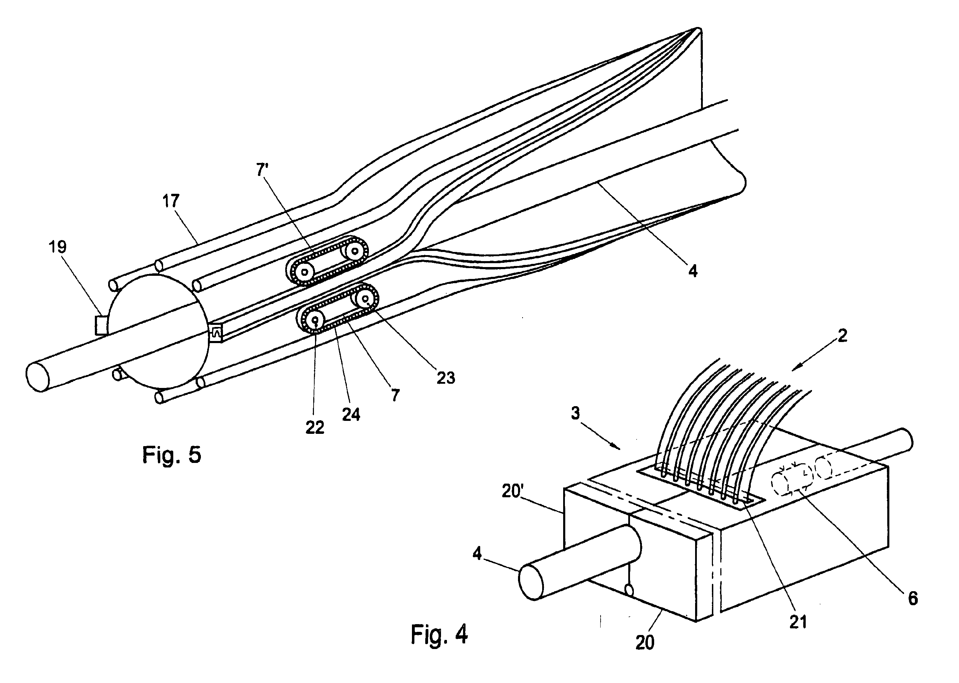

The device comprises a reel 1 on which a tape-shaped element 2, whose exemplary embodiment is shown in more detail in FIG. 2a, 2b and FIG. 3, has been wound. A closing and conveyor device 3, which is shown in more detail in FIG. 4, closes the tape-shaped element 2 into a duct 2' around an existing longitudinal element 4, such as a cable, located in the soil.
For simplicity's sake, below there will be spoken of a cable 4, but it will be understood that the invention may also be applied with other longitudinal elements, such as, e.g., water or gas tubes. The device 3 is provided with means 6 for anchoring the device with respect to the cable 4 and thus preventing the device from shifting with respect to the cable 4 instead of the duct 2' around the cable. The device 3 is further provided with means of transport 7, 7', such as conveyor rollers or belts, serving to form the tape-shaped element 2 around the cable 4 into a duct 2', and to propell said duct along the cable. At the front end, the duct 2' is provided with a spouting headpiece 5, which is provided with openings through which a fluid under pressure may be conducted to loosen and/or widen the soil surrounding the headpiece 5 in order to free the way for the duct 2'. The fluid is, e.g., water or bentonite, which is fed to the reel 1 by way of a line 8. In the event of a tape-shaped element 2 which is provided with microducts to be dealt with below, the fluid may be conducted to the headpiece 5 by way of said microducts. If there are no microducts involved, the fluid is fed to the device 3 in order to be directly fed to the interior of the duct 2'.

FIG. 2a shows the tape-shaped element 2 in more detail. Said element consists of a carrier 10 which may consist of synthetic substance, such as HDPE, may consist of one and possibly of several layers having, e.g., an intermediate aluminium layer as water-retaining structure. The longitudinal edges of the carrier 10 are provided with coupling means in the form of closing members 11 and 12, which are complementary and may be, e.g., of the type which is applied as "Zip-lock" in the event of plastic bags. In this case, the closing member 11 consists of a body 13 having an elongated ridge 14 provided with barbs not shown, and the closing member 12 consists of a body 15 having an elongated slot 16 in which openings have been applied which are capable of co-operating with the barbs.

FIG. 3 shows a tape-shaped carrier 2 in the status of having been formed into a duct 2', the closing members 11 and 12 engaging with one another.

Preferably, the carrier 10 is provided with one or more microducts 17 which, either directly but preferably by way of a connecting ridge 18, are connected to the carrier 10. The advantage of applications of such a connecting ridge 18 is that a microduct 17 may be simple to release from the tape-shaped element, e.g., by cutting into the ridge, as is shown in FIG. 2b. Said releasing of a microduct from the duct 2' offers an advantage in the event of forming branchings to, e.g., homes.

The microducts 17 may be applied either to one side of the tape-shaped element 10 or on either side. If they are applied to one side, they may optionally come to lie along the internal circumference or the external circumference of the duct 2'.

The microducts 17 may be empty, so that an (optical) cable or fibre may be applied therein, but may also be provided in advance with, e.g., plastic optical fibre or other optical fibres or cables. The diameter of the microduct 17 is, e.g., 5-7 mm.

The carrier 10 is preferably provided with a longitudinal ridge 19 shown only in figures 3 and 5, which is applied at the location of any of the microducts 17 and which, just as the closing members 11, 12, serves to be engaged by the means of transport 7, 7' to propell the duct 2'. By carrying out said propulsion on either side of the duct, a regular transport takes place.

FIG. 2c schematically shows variants of the closing members, which facilitate the optional closure of the tape-shaped element 2 in several ways, namely, having the microduct at the internal or external side, and to couple the tape-shaped element transversely in order to be capable of thus manufacturing ducts having variable diameters. It goes without saying that each of said options may be separately applied.

FIG. 4 shows, in more detail, the device 3 consisting of 2 pivotably connected parts 20, 20' in order to be capable of placing the device around the cable 5 (sic). Moreover, the device is provided with an input opening 21, by way of which the tape-shaped element 2 is conducted into the device. The shape of the opening 21 may be adjusted to the width of the tape-shaped element 2 and to the number of microducts 17 present.

FIG. 5 shows a possible embodiment of means of transport 7, 7' for closing the closing members 11 and 12 of the tape-shaped element 2, and for propelling the duct formed after closure. The means 7, 7' and the pair of means of transport engaging with the ridge 19, not shown, located on the opposite side of the duct, each consist of a pair of drive wheels 22, 23 and a conveyor belt 24 running around it. It goes without saying that other closing means and means of transport are possible, and that there is provided for a drive for the wheels 22, 23. It is also possible to apply closing means only and to have the transport of the duct 2' carried out along the cable 4 by the headpiece 5. For this purpose, the headpiece 5 may be realised, e.g., as a drill bit. Other ways of propelling the duct, too, are imaginable, e.g., by way of mechanical tensile force, manual pushing or pulling force etc. Over shorter sections, the manual element may be pulled, e.g., with manual force through the device 3 in order to form a duct around an existing cable.

## Claims

1. Method for installing a duct (2'), a longitudinal member (4) being present along the section over which the duct is to be installed, the longitudinal element present being utilised as a guide for the duct to be installed, and the duct being propelled,
wherein a tape-shaped element (2) is formed around the existing longitudinal element during propulsion into a duct (2') closed all around, by coupling to one another coupling means (11, 12) present at the longitudinal edges of the tape-shaped element.

2. Method according to claim 1, wherein the tape-shaped element consists of a carrier (10) provided, on at least one side, with microducts (17).

3. Method according to claim 2, wherein the microducts are connected to the carrier by way of a ridge (18).

4. Method according to claim 2 or 3, wherein, for the benefit of forming a branching in the duct, a microduct (17) is interrupted and is released from the circumference of the duct.

5. Tape-shaped element intended for use with a method according to any of the claims 1 to 4 inclusive, wherein along the longitudinal edges the tape-shaped element (2) is provided with coupling means (11, 12).

6. Tape-shaped element according to claim 5, wherein the coupling means comprise closing members (11, 12).

7. Tape-shaped element according to claim 6, wherein the closing member (11) along one longitudinal edge comprises an upright edge (14) having barbs, and that the closing member (12) along the other longitudinal edge comprises a slot (16) having upright walls, which are provided with means for including the barbs.

8. Tape-shaped element according to claim 4, 5 or 6, wherein the tape-shaped element consists of a carrier (10), which on at least one side is provided with microducts (17).

9. Tape-shaped element according to claim 8, wherein the microducts (17) are connected to the carrier (10) by way of a ridge (18).

10. Tape-shaped element according to claim 6, 7 or 8, wherein the diameter of each microduct is approx. 5-7 mm.

11. Tape-shaped element according to claim 8 or 9, wherein in the microducts there is included an optical fibre or cable.

12. Tape-shaped element according to any of the claims 6 to 11 inclusive, wherein the closing members are implemented in such a manner that the belt may be closed optionally with a first side on the outside of the duct or on the inside of the duct.

13. Tape-shaped element according to any of the claims 6 to 12 inclusive, wherein the closing members (11, 12) are implemented in such a manner that several tape-shaped elements may be transversely coupled to one another.

14. Tape-shaped element according to any of the claims 6 to 13 inclusive, wherein between the closing members (11, 12) there is provided for a ridge (19) with which conveyor means (7, 7') are capable of engaging.

15. Tape-shaped element according to any of the claims 7 to 13 inclusive, wherein the carrier consists of several layers.

16. System for carrying out a method according to claim 1,
**characterised by**
- means (1) for supplying a tape-shaped element (2) which is provided with longitudinal edges capable of being mutually coupled;
- means (3, 7, 7') for folding, around a longitudinal element (4), the tape-shaped element and for coupling longitudinal edges to one another;
- means (7, 7') for, with respect to the longitudinal element, conveying the tape-shaped element formed into a duct (2'); and
- means (8, 17, 5) for feeding a fluid to the front end of the duct.

17. System according to claim 16, wherein the longitudinal edges of the tape-shaped element are provided with complementary closing members (11, 12).

18. Device to be used with a system according to claim 16 or 17, wherein the device consists of at least two parts (20, 20') which are formed in such a manner that the device may be placed around the longitudinal element (4), the device being further provided with the means for folding, around a longitudinal element, the tape-shaped element and for coupling to one another the longitudinal edges.

19. Device according to claim 18, wherein the device is further provided with the means for conveying (7, 7'), with respect to the longitudinal element, the tape-shaped element formed into a duct, and means (6) for anchoring the device with respect to the longitudinal element.

20. Device according to claims 18 and 19, wherein the means for coupling, to one another, the longitudinal edges and propelling, with respect to the longitudinal element, the tape-shaped element formed into a duct, comprise at least two conveying belts (24) lying opposite one another and engaging with the closing members (11, 12).

## Patentansprüche

1. Verfahren zum Installieren eines Rohrs (2'), wobei entlang dem Abschnitt, über den das Rohr zu installieren ist, ein längliches Element (4) vorliegt, das als eine Führung für das zu installierende Rohr verwendet wird, und das Rohr angetrieben wird,
wobei während des Treibens in ein Rohr (2') ein bandförmiges Element (2) um das vorliegende längliche Element gebildet und darum herum geschlossen wird, indem an den Längsrändern des bandförmigen Elements vorliegende Koppelmittel (11, 12) aneinandergekoppelt werden.

2. Verfahren nach Anspruch 1, wobei das bandförmige Element aus einem Träger (10) besteht, der auf mindestens einer Seite mit Mikrokanälen (17) versehen ist.

3. Verfahren nach Anspruch 2, wobei die Mikrokanäle über einen Steg (18) mit dem Träger verbunden sind.

4. Verfahren nach Anspruch 2 oder 3, wobei zur Ausbildung einer Abzweigung im Rohr ein Mikrokanal (17) unterbrochen und vom Umfang des Rohrs gelöst wird.

5. Bandförmiges Element für die Verwendung mit einem Verfahren nach einem der Ansprüche 1 bis einschließlich 4, wobei das bandförmige Element (2) entlang den Längsrändern mit Koppelmitteln (11, 12) versehen ist.

6. Bandförmiges Element nach Anspruch 5, wobei die Koppelmittel Schließelemente (11, 12) umfassen.

7. Bandförmiges Element nach Anspruch 6, wobei das Schließelement (11) entlang einem Längsrand einen aufrechten Rand (14) mit Haken umfasst und wobei das Schließelement (12) entlang dem anderen Längsrand einen Schlitz (16) mit aufrechten Wänden umfasst, die mit Mitteln zur Aufnahme der Haken versehen sind.

8. Bandförmiges Element nach Anspruch 4, 5 oder 6,
wobei das bandförmige Element aus einem Träger (10) besteht, der mindestens an einer Seite mit Mikrokanälen (17) versehen ist.

9. Bandförmiges Element nach Anspruch 8, wobei die Mikrokanäle (17) über einen Steg (18) mit dem Träger (10) verbunden sind.

10. Bandförmiges Element nach Anspruch 6, 7 oder 8,
wobei der Durchmesser jedes Mikrokanals ungefähr 5 - 7 mm beträgt.

11. Bandförmiges Element nach Anspruch 8 oder 9, wobei ein Lichtwellenleiter oder ein Glasfaserkabel in den Mikrokanälen eingeschlossen ist.

12. Bandförmiges Element nach einem der Ansprüche 6 bis einschließlich 11, wobei die Schließelemente so implementiert sind, dass das Band wahlweise mit einer ersten Seite an der Außenseite des Rohrs oder an der Innenseite des Rohrs geschlossen werden kann.

13. Bandförmiges Element nach einem der Ansprüche 6 bis einschließlich 12, wobei die Schließelemente (11, 12) so implementiert sind, dass mehrere bandförmige Elemente quer aneinandergekoppelt werden können.

14. Bandförmiges Element nach einem der Ansprüche 6 bis einschließlich 13, wobei zwischen den Schließelementen (11, 12) ein Steg (19) vorgesehen ist, mit dem Fördermittel (7, 7') in Eingriff kommen können.

15. Bandförmiges Element nach einem der Ansprüche 7 bis einschließlich 13, wobei der Träger aus mehreren Schichten besteht.

16. System zur Durchführung eines Verfahrens nach Anspruch 1, **gekennzeichnet durch**
- Mittel (1) zur Zuführung eines bandförmigen Elements (2), das mit Längsrändern versehen ist, die gegenseitig gekoppelt werden können,
- Mittel (3, 7, 7') zum Falten des bandförmigen Elements um ein längliches Element (4) und zum Aneinanderkoppeln von Längsrändern,
- Mittel (7, 7') zum Fördern des zu einem Rohr (2') geformten bandförmigen Elements bezüglich des länglichen Elements und
- Mittel (8, 17, 5) zum Zuführen eines Fluids zum Vorderende des Rohrs.

17. System nach Anspruch 16, wobei die Längsränder des bandförmigen Elements mit komplementären Schließelementen (11, 12) versehen sind.

18. Vorrichtung zur Verwendung mit einem System nach Anspruch 16 oder 17, wobei die Vorrichtung aus mindestens zwei Teilen (20, 20') besteht, die so ausgebildet sind, dass die Vorrichtung um das längliche Element (4) platziert werden kann, wobei die Vorrichtung ferner mit den Mitteln zum Falten des bandförmigen Elements um ein längliches Element und zum Aneinanderkoppeln der Längsränder versehen ist.

19. Vorrichtung nach Anspruch 18, wobei die Vorrichtung ferner mit den Mitteln (7, 7') zum Fördern des zu einem Rohr geformten bandförmigen Elements bezüglich des länglichen Elements und mit Mitteln (6) zur Verankerung der Vorrichtung bezüglich des länglichen Elements versehen ist.

20. Vorrichtung nach Ansprüchen 18 und 19, wobei die Mittel zum Aneinanderkoppeln der Längsränder und zum Treiben des zu einem Rohr geformten bandförmigen Elements bezüglich des länglichen Elements mindestens zwei Förderbänder (24) umfassen, die einander gegenüberliegen und mit den Schließelementen (11, 12) in Eingriff kommen.

## Revendications

1. Procédé pour installer un conduit (2'), un organe longitudinal (4) étant présent le long de la section sur laquelle le conduit doit être installé, l'élément longitudinal présent étant utilisé comme guide pour le conduit à installer, et le conduit étant propulsé,
un élément en forme de bande (2) étant formé autour de l'élément longitudinal existant au cours de la propulsion pour former un conduit (2') fermé tout autour, en accouplant l'un à l'autre des moyens d'accouplement (11, 12) présents au niveau des bords longitudinaux de l'élément en forme de bande.

2. Procédé selon la revendication 1, dans lequel l'élément en forme de bande est constitué d'un support (10) pourvu, sur au moins un côté, de microconduits (17).

3. Procédé selon la revendication 2, dans lequel les microconduits sont connectés au support par le biais d'une crête (18).

4. Procédé selon la revendication 2 ou 3, dans lequel, dans le but de former un branchement dans le conduit, un microconduit (17) est interrompu et est séparé de la circonférence du conduit.

5. Elément en forme de bande destiné à être utilisé avec un procédé selon l'une quelconque des revendications 1 à 4 comprise, dans lequel l'élément en forme de bande (2) est pourvu de moyens d'accouplement (11, 12) le long des bords longitudinaux.

6. Elément en forme de bande selon la revendication 5, dans lequel les moyens d'accouplement comprennent des organes de fermeture (11, 12).

7. Elément en forme de bande selon la revendication 6, dans lequel l'organe de fermeture (11) comprend, le long d'un bord longitudinal, un bord droit (14) ayant des barbes, et l'organe de fermeture (12), le long de l'autre bord longitudinal, comprend une fente (16) ayant des parois droites, qui sont pourvues de moyens pour inclure les barbes.

8. Elément en forme de bande selon la revendication 4, 5 ou 6, dans lequel l'élément en forme de bande est constitué d'un support (10), qui, sur au moins un côté, est pourvu de microconduits (17).

9. Elément en forme de bande selon la revendication 8, dans lequel les microconduits (17) sont connectés au support (10) par le biais d'une crête (18).

10. Elément en forme de bande selon la revendication 6, 7 ou 8, dans lequel le diamètre de chaque microconduit est d'environ 5 à 7 mm.

11. Elément en forme de bande selon la revendication 8 ou 9, dans lequel, dans les microconduits, est incorporé(e) une fibre optique ou un câble.

12. Elément en forme de bande selon l'une quelconque des revendications 6 à 11 comprise, dans lequel les organes de fermeture sont mis en oeuvre de telle sorte que la courroie puisse être fermée optionnellement avec un premier côté sur l'extérieur du conduit ou sur l'intérieur du conduit.

13. Elément en forme de bande selon l'une quelconque des revendications 6 à 12 comprise, dans lequel les organes de fermeture (11, 12) sont mis en oeuvre de telle sorte que plusieurs éléments en forme de bande puissent être accouplés transversalement les uns aux autres.

14. Elément en forme de bande selon l'une quelconque des revendications 6 à 13 comprise, dans lequel entre les organes de fermeture (11, 12) est prévue une crête (19) avec laquelle des moyens de transport (7, 7') peuvent s'engager.

15. Elément en forme de bande selon l'une quelconque des revendications 7 à 13 comprise, dans lequel le support est constitué de plusieurs couches.

16. Système pour mettre en oeuvre un procédé selon la revendication 1, **caractérisé par** :
- des moyens (1) pour fournir un élément en forme de bande (2) qui est pourvu de bords longitudinaux capables d'être accouplés l'un à l'autre ;
- des moyens (3, 7, 7') pour plier, autour d'un élément longitudinal (4), l'élément en forme de bande et pour accoupler les bords longitudinaux l'un à l'autre ;
- des moyens (7, 7') pour transporter, par rapport à l'élément longitudinal, l'élément en forme de bande formé en forme de conduit (2') ; et
- des moyens (8, 17, 5) pour acheminer un fluide à l'extrémité avant du conduit.

17. Système selon la revendication 16, dans lequel les bords longitudinaux de l'élément en forme de bande sont pourvus d'organes de fermeture complémentaires (11, 12).

18. Dispositif destiné à être utilisé avec un système selon la revendication 16 ou 17, dans lequel le dispositif est constitué d'au moins deux parties (20, 20') qui sont formées de telle manière que le dispositif puisse être placé autour de l'élément longitudinal (4), le dispositif étant en outre pourvu des moyens pour plier, autour d'un élément longitudinal, l'élément en forme de bande et pour accoupler l'un à l'autre les bords longitudinaux.

19. Dispositif selon la revendication 18, dans lequel le dispositif est en outre pourvu des moyens de transport (7, 7'), par rapport à l'élément longitudinal, de l'élément en forme de bande formé en forme de conduit, et de moyens (6) pour ancrer le dispositif par rapport à l'élément longitudinal.

20. Dispositif selon les revendications 18 et 19, dans lequel les moyens pour accoupler l'un à l'autre les bords longitudinaux et pour propulser, par rapport à l'élément longitudinal, l'élément en forme de bande formé en forme de conduit, comprennent au moins deux courroies de transport (24) situées en regard l'une de l'autre et s'engageant avec les organes de fermeture (11, 12).
